# EUROPEAN PATENT APPLICATION

(11) **EP 3 301 830 A1**
(43) Date of publication of application: **04.04.2018**
(21) Application number: 16290191.2
(22) Date of filing: 30.09.2016
(51) Int. Cl.: H04B 10/079, H04B 10/294

(54) **METHOD FOR IMPROVING SIGNAL TRANSMISSION IN PASSIVE OPTICAL NETWORKS**

(71) Applicant: ALCATEL LUCENT, 92100 Boulogne-Billancourt (FR)
(72) Inventor: Straub, Michael, 70435 Stuttgart (DE); Hehmann, Jörg, 70435 Stuttgart (DE); Bonk, Rene, 70435 Stuttgart (DE); Pöhlmann, Wolfgang, 70435 Stuttgart (DE)
(74) Representative: Louis Pöhlau Lohrentz

(57) **Abstract**

The invention concerns a method for improving signal transmission in a passive optical network. The method comprises balancing, by a network element (2), at least two optical signals (13a, 13b, 13c, 13d) by attenuating one or more of the at least two optical signals (13a, 13b, 13c, 13d). The invention concerns further the network element (2) and a software program product used to implement the method.

## Description

### Field of the invention

The invention relates to the field of passive optical networks, more specifically to a method and apparatus for improving signal transmission in a passive optical network.

### Background

In passive optical networks, upstream signals coming from the optical network terminals are received by an optical line terminal by means of a photodiode of the receiver of the optical line terminal. Since the distances between different optical network terminals and the optical line terminal might vary significantly, the signals of the optical network terminals might differ in optical power in the degree of 20dB or more, thus exceeding the optical power input range of the photodiode and are not properly received by the photodiode, because either the lowest optical signals are too weak and are below the lower threshold of the photodiode (and thus are below the sensitivity level of the photodiode or disappear amongst the noise) and/or the highest optical signals are too strong and exceed the upper threshold of the photodiode (and thus fall in the non-linearity range of the photodiode or even might destroy the photodiode). The problem is aggravated in case an optical amplifier (implemented in front of the photodiode) is used by the optical line terminal to amplify the optical signals received from the one or more optical network terminals. Because of the high variation of the optical signals in optical power, either the optical power input range of the amplifier might be exceeded by the differently strong optical signals and/or due to the amplification of the optical signals by the optical amplifier at least part of the optical signals might be too strong for the receiving photodiode and thus exceed the optical power input range of the photodiode.

In more detail, because of the high variations of the different optical signals in power, an optical amplifier might have to be used which has a huge optical power input range to be able to amplify both the lowest and the strongest optical signals. However, because of the amplification of the optical signals by the optical amplifier, optical signals having already a high optical power might be amplified so much that the photodiode of the receiver of the optical line terminal is overloaded.

Therefore in currently known implementations, the network deployment is restricted, namely by reducing the differences of the distances of the optical network terminals and the optical line terminal, so that the optical power variations between the lowest optical signals (usually of the most distant optical network terminals) and the strongest optical signals (usually of the nearest optical network terminals) are less large, e.g. by an dynamic power range less than 20 dB.

These network deployment restrictions are not desired, because they limit the establishment of the optical network. However, without respecting these network deployment restrictions, the signal transmission is degraded, because either the lowest signals are not properly received by the photodiode or the highest signals exceed the optical power input range of the photodiode of the optical receiver and thus are not properly received either.

Similarly, in the downstream direction, the optical power of optical signals of an optical line terminal might vary significantly, when the signals are received at the optical network terminals due to the different distances between the optical network terminals and the optical line terminal. For example, a signal when received by an optical network terminal which is quite near to the optical line terminal, might be too strong for the optical receiver photodiode of the near optical network terminal, whereas a signal when received by an optical network terminal which is quite far away from the optical line terminal, might be too weak for the optical receiver photodiode of the far optical network terminal.

Therefore, it is an objective of the invention to improve signal transmission in passive optical networks.

### Summary of the Invention

The objective of the invention is achieved by a method for improving signal transmission in a passive optical network, PON. The method comprises balancing, by a network element, at least two optical signals by attenuating one or more of the at least two optical signals.

The objective of the invention is further achieved by a network element used for improving signal transmission in a passive optical network, PON. The network element is adapted to balance at least two optical signals by attenuating one or more of the at least two optical signals.

Preferably, the network element comprises at least two attenuators. Preferably, the number (in the sense of quantity) of the at least two attenuators comprised by the network element is at least equal to the number (quantity) of the at least two optical signals which are balanced by the network element. Therefore, preferably, the network element provides one respective attenuator for each of the at least two optical signals, for example a first attenuator for a first optical signal and a second attenuator for a second optical signal, wherein preferably, the optical signals (e.g. the first and the second optical signal) are processed (in particular attenuated) in parallel by the network element by means of the respective attenuator, e.g. by the first attenuator and by the second attenuator, respectively. Preferably, each attenuator of the at least two attenuators is situated in the network element in a respective path by which a respective optical signal passes through the network element. Preferably, each of the at least two attenuators is adapted to attenuate the respective optical signal which passes through the respective path, in which the respective attenuator is situated, within the network element. Preferably, an attenuator is adapted to attenuate an optical signal by reducing the optical power of the optical signal. Preferably, an attenuator is adapted to attenuate an optical signal by means comprising one or more of: absorption, reflection, diffusion, scatfiering, deflection, diffraction, and dispersion.

The objective of the invention is further achieved by a software program product adapted to execute the method for improving signal transmission in a passive optical network, PON, when the software program product is executed on a computer. The computer is preferably a micro-controller, µ-controller.

Further advantages are achieved by preferred embodiments.

In a preferred embodiment, attenuating one or more of the at least two optical signals comprises reducing a respective optical power of the one or more of the at least two optical signals. In particular, attenuating an optical signal comprises reducing the optical power of the optical signal. Further, in particular, attenuating two optical signals, e.g. a first and a second optical signal, comprises reducing the optical power of each of the two optical signals, this means the optical power of the first optical signal and the optical power of the second optical signal.

Preferably, attenuating an optical signal, by the network element, in particular by a respective attenuator comprised by the network element, comprises one or more of: absorbing, reflecting, diffusing, scattering, deflecting, diffracting, and dispersing, namely in particular a part of the optical signal. Preferably, the part of the optical signal which is absorbed, reflected, diffused, scattered, deflected, diffracted and/or dispersed, is determined by an amount by which the optical signal is attenuated. For example, an optical signal is attenuated by an amount of 30 percent, a part of 30 percent of the optical signal might be absorbed. In another example, an optical signal is attenuated by an amount of 50 percent, a part of 50 percent of the optical signal might be reflected. Preferably, the part of the optical signal which is reflected is reflected into the absorber substrate. Thereby, preferably, a reflection into the system path is avoided.

In a preferred embodiment, balancing, by the network element, the at least two optical signals comprises adjusting, by the network element, the at least two optical signals to a respective optical power input range of one or more optical receivers.

In a preferred embodiment, the respective optical power input range of the one or more optical receivers is determined by a respective photodiode of the one or more optical receivers. Thus, preferably, in other words, the respective optical power input range of the one or more optical receivers is determined by the optical power input range of the respective photodiode of the respective one or more optical receivers.

In a preferred embodiment, there is one OLT. The optical receiver of the OLT comprises a photodiode. Preferably, the optical power input range of the optical receiver is determined by the optical power input range of the photodiode of the optical receiver. Preferably, the optical power input range of the photodiode of the optical receiver and thus of the optical receiver is determined by a lower threshold of the photodiode and by an upper threshold of the photodiode.

In preferred embodiment, there are more than one OLT. Preferably, what has been described with reference to one OLT applies analogously to each photodiode of the respective optical receiver of the respective OLT. In particular, in case of more than one OLT, each OLT comprises an optical receiver and each optical receiver of each OLT has a respective photodiode, and the optical power input range of the respective optical receiver is determined by the optical power input range of the photodiode of the photodiode of the respective optical receiver.

Thus, preferably, the respective optical power input range of the one or more optical receivers is determined by a respective photodiode of the one or more optical receivers, in particular by a lower threshold of the respective photodiode and by an upper threshold of the respective photodiode.

In a preferred embodiment, the respective optical power input range of the one or more optical receivers is determined by one or more optical amplifiers of the one or more optical receivers. In preferred embodiments, in front of the photodiode of an optical receiver, an optical amplifier is implemented. Preferably, the optical amplifier amplifies the at least two optical signals linearly. In a preferred embodiment, the method is implemented on at least two optical signals in the upstream direction, i.e. from optical network terminals, ONT, to one or more optical line terminals, OLT.

In a preferred embodiment, the-at least two optical signals are received, by the network element, from at least two optical network terminals, ONT, respectively. In particular, the network element receives a first optical signal from a first ONT and a second optical signal from a second ONT, and preferably, one or more further optical signals from respective one or more further ONT.

In a preferred embodiment, the one or more optical receivers are optical receivers of one or more OLT, respectively. In a preferred embodiment, there is one optical receiver and one OLT, namely one optical receiver of the one OLT. In another preferred embodiment, there is one second optical receiver of one second OLT. In a preferred embodiment, there is one or more further optical receivers of one or more further OLT, respectively.

In a preferred embodiment, one or more of the one or more OLT are implemented at a Central Office, CO, of the PON. In referred embodiments, one or more of the one or more OLT are implemented in the optical distribution network, ODN. In a preferred embodiment, the one or more OLT which are implemented at a CO comprise one or more OLT which are implemented in the CO. In a preferred embodiment, the one or more OLT which are implemented at a CO comprise one or more OLT which are implemented adjacent to the CO, thus they are implemented in the optical distribution network, ODN, in adjacency to the CO. In preferred embodiments, one or more OLT are implemented in the ODN remotely from the CO.

In a preferred embodiment, balancing the at least two optical signals comprises modifying, by the network element, the attenuating of the one or more of the at least two optical signals based on control signals transmitted from the one or more OLT to the network element. Preferably, the control signals are based on measurements of the at least two optical signals, wherein the measurements are preferably made by the one or more OLT.

In a preferred embodiment, the measurements are transmitted from the one or more OLT to the network element by means of Intelligent Splitter Module, ISM, protocol. In particular, the ISM protocol is a proprietary protocol.

In a preferred embodiment, the measurements made by the one or more OLT comprise a respective determination of the one or more OLT that the at least two optical signals received from the at least two ONT are exceeding the optical power input range of the photodiode of the respective optical receiver of the one or more OLT.

In a preferred embodiment, the at least two optical signals received from the at least two ONT are determined to exceed the optical power input range of the photodiode of the respective optical receiver of the one or more OLT, in case the at least two optical signals exceed an optical power input range of 20dB.

In a preferred embodiment, the at least two optical signals received from the at least two ONT are determined to exceed the optical power input range of the photodiode of the respective optical receiver, in case one or more of the at least two optical signals exceed an upper threshold of the photodiode of the respective optical receiver and/or in case one or more of the at least two optical signals are below a lower threshold of the photodiode of the respective optical receiver.

In particular, in case the upper threshold of the photodiode is exceeded by an optical signal, the photodiode might work non-linearly and thus receive the optical signal not properly or even the photodiode might be destroyed by the optical signal. In case an optical signal is below the lower threshold of the photodiode, the optical signal might disappear amongst the noise and/or might not be received by the photodiode, because the sensitivity of the photodiode is not good enough to receive the optical signal properly.

Further, in particular, there might be situations where one or more of the at least two optical signals are not properly received without the implementation of the present method. For example, one optical signal from a respective ONT is received properly by an optical receiver, because said optical signal is within the optical power input range of the photodiode of the optical receiver, but another optical signal of another ONT is not received properly by the same optical receiver, because said latter optical signal is not within the optical power input range of the photodiode of said optical receiver, namely either above the upper threshold or below the lower threshold of the photodiode of the optical receiver. Further, there might be situations, where one optical signal is above the upper threshold and another optical signal is below the lower threshold and thus these optical signals are not properly received by the optical receiver. The person skilled in the art will appreciate other situations, where one or more of the at least two optical signals are not received properly, because one or more of the at least two optical signals are either below the lower threshold or above the upper threshold of the photodiode of the optical receiver. Thus, preferably, by the described method of the invention, one or more of the at least two optical signals are attenuated thus reducing the dynamic power range of the at least tow optical signals so that the at least two optical signals are within the optical power input range of the respective photodiode of the respective optical receiver.

Thus, preferably, attenuating one or more of the at least two optical signals comprises reducing the dynamic power range of the at least two optical signals, preferably, to a dynamic power range of less than 20 dB.

In a preferred embodiment, the at least two optical signals of respective at least two ONT are received by one OLT. The OLT measures the at least two optical signals. In particular, the OLT measures, if the at least two optical signals exceed the optical power input range of the photodiode of the optical receiver of the OLT, in particular after being amplified by the optical amplifier in front of the optical receiver photodiode of the OLT. In particular, the OLT determines that the at least two optical signals exceed the optical power input range, if one or more of the at least two optical signals are below the lower threshold of a respective photodiode of a respective optical receiver and/or if one or more of the at least two optical signals are above the upper threshold of the respective photodiode of the respective optical receiver.

Therefore, preferably, as described throughout the invention, one or more of the at least two optical signals are attenuated so as to reduce the dynamic power range of the at least two optical signals to less than 20 dB and therefore to keep the at least two optical signals within the optical power input range of the photodiode of the optical receiver.

In a preferred embodiment, the at least two optical signals comprise a particular optical signal received from a particular ONT of the at least two ONT.

Preferably, what is herein described with reference to a particular optical signal might be applied to each of the at least two optical signals. This means, preferably, each of the at least two optical signals might be regarded as a particular optical signal. For example, a first optical signal of the at least two optical signals is regarded as a particular optical signal and the implementation described with reference to a particular optical signal is applied to the first optical signal. Similarly, a second optical signal of the at least two optical signals is regarded as a particular optical signal and the implementation described with reference to a particular optical signal is applied to the second optical signal. Similarly, one or more further optical signals are regarded as one or more further particular optical signals, respectively, and the implementation with reference to a particular optical signal is applied to the one or more further optical signals, respectively. In particular, the features "first", "second", "further" do not imply a specific order, but rather are used as names. Therefore, the implementation on the first, second and/or one or more further optical signals, might be applied contemporaneously.

In a preferred embodiment, the particular optical signal received from the particular ONT of the at least two ONT is attenuated, preferably based on a distance between the particular ONT and the network element. Preferably, the particular optical signal is attenuated by reducing the optical power of the particular optical signal.

In a preferred embodiment, attenuating the particular optical signal received from the particular ONT is attenuated, in particular by reducing the optical power of the particular optical signal, by an amount which is inversely proportional to the distance between the particular ONT and the network element. In case the distance between the particular ONT and the network element is large, then, usually, the particular optical signal received from said particular ONT might be weak (or low; this means having a low optical power). Then, said particular optical signal is not attenuated or attenuated only a little bit, this means attenuated by a small amount (for example a very large distance causes a very low signal power, thus the particular optical signal is not attenuated; for example a medium large distance causes a medium optical signal power, thus the particular optical signal is attenuated by small amount). Otherwise, in case the distance between the particular ONT and the network element is short, usually, the particular optical signal received from said particular ONT might be strong (or high; this means having a high optical power). Then, said particular optical signal is attenuated rather much, this means attenuated by a big amount. Similarly, for each optical signal the distance between the respective ONT and the network element is determined and based on the distance between said ONT and the network element, it is determined, if said optical signal is attenuated or not, and in case it is attenuated, it is determined, how much it is attenuated, this means by which amount. In particular, the amount might be indicated by an absolute value (e.g. 1, 2, etc., e.g., in the unit of milli Watt or mikro Watt) or by a relative value (e.g. a percentage, e.g.,10 percent, 20 percent; e.g. dB = decibel) or with reference to a predetermined reference value (e.g. dBm =decibel-milliwatts) and the amount might be indicated relative to the optical signal when received, this means before being attenuated, and/or relative to the one or more further optical signals of the at least two optical signals.

In a preferred embodiment, the attenuating of one or more optical signals is primarily based on the distance between a particular ONT from which a particular optical signal is received and the network element, so that the network element attenuates the particular optical signal before sending the particular optical signal to the OLT. Then, the OLT measures the particular optical signal and might determine that the particular optical signal is still too strong for the photodiode of the OLT and therefore sends its measurements results to the network element and the network element attenuates the particular optical signal accordingly.

In a preferred embodiment, the particular optical signal received from the particular ONT of the at least two ONT is attenuated, preferably based on a split ratio of the network element. Preferably, the particular optical signal is attenuated by reducing the optical power of the particular optical signal.

Preferably, the particular optical signal received from the particular ONT of the at least two ONT is attenuated based on a split ratio of one or more of: the network element and one or more further network elements. Preferably, the particular optical signal received from the particular ONT of the at least two ONT is attenuated based on a split ratio which is determined by one or more of the network element and one or more further network elements.

Preferably, the split ratio of a network element is defined as the ratio of the one or more input ports to the one or more output ports of the network element (as will be described in more detail below). Preferably, in case of one or more further network elements beside the network element, the particular optical signal might be attenuated based on a split ratio which is determined by the split ratios of the network element and the one or more further network elements.

In a preferred embodiment, the method comprises combining, by the network element, the at least two optical signals, in particular after having attenuated one or more of the at least two optical signals.

In a preferred embodiment, the network element comprises an optical splitter and the at least two optical signals are combined by the optical splitter of the network element, this means the optical splitter is used in this embodiment as a combiner.

As mentioned earlier, in preferred embodiments, a particular optical signal received from a particular ONT of the at least two ONT is attenuated based on a split ratio of the network element, or in preferred embodiments, based on a split ratio determined by the network element and one or more further network elements. In a preferred embodiment, in case the network element comprises an optical splitter and the optical splitter is used as a combiner, the split ratio is determined as a ratio of the input ports (where the at least two optical signals received from the at least two ONTs are input to the optical splitter) to the output port (where the combined optical signal is sent to the one or more OLT). Preferably, the ratio refers to the existing input ports of the optical splitter, this means not to the actually number of optical signals which are actually received. This means, for example an optical splitter which is used as a combiner has four input ports and one output port. Thus the split ratio is four to one in this example. This is preferably also true, in case only three optical signals are received on respective three input ports, while the forth input port is not used. Thus in this example, the split ratio is four to one. Actually, the combined optical signal comprises each of the four optical signals by a signal level of 0.25 in comparison to the respective optical signal at the input port (this is only because of the split ratio of the optical splitter and not taken in consideration attenuating one or more of the optical signals by means of the described inventive method). Further, preferably, in the ODN more than one network elements are implemented which each comprise a respective optical splitter respectively. Thus, in the described embodiment, the respective optical splitters of the network elements are implemented in splitter levels. For example, there are three optical signals and each optical signal has firstly the value of 1 (before being received by any optical splitter). Two optical signals are received and combined by a first optical splitter (thus on a first splitter level). The combined optical signal combined by the first optical splitter comprises the first and the second optical signal. Then the combined optical signal (comprising the first and second optical signal) and the third optical signal are combined by a second optical splitter (thus on a second splitter level). The first and the second optical splitter might have each two input ports and one output port when used as a combiner as described herein. Thus the split ratio of the first optical splitter is two to one and the split ration of the second optical splitter is also two to one. Thus, the first and second optical signal which have been combined by the first optical splitter, have each an optical power of 0.5 in comparison with the respective optical signal at the respective input port. The combined optical signal comprising the first and the second optical signal has thus the value of 1 (comprising the first optical signal by 0.5 and the second optical signal by 0.5). As mentioned, then the combined optical signal comprising the first and the second optical signal and the third optical signal are combined by the second optical splitter. At the output port of the second optical splitter the combined optical signal comprises the third optical signal by 0.5 and the combined optical signal comprising the first and the second optical signal together by 0.5, thus the first optical signal by 0.25 and the second optical signal by 0.25. Therefore, the third optical signal is twice as strong as each of the first and second optical signal, when received at the one or more OLT (when not considering the inventive described method of attenuating one or more of the optical signals). Therefore, to eliminate the effect of different signal power due to the spit ratio of the optical splitters, in particular in case more than one optical splitter is used in the ODN, one or more of the at least two optical signals are attenuated based on the split ratio of the network element, here of the network element which comprises the third optical splitter, in particular by an amount which is inversely proportional to the split ratio of the network element. Here, the split ratio of the second network element comprising the second optical splitter is two to one. Therefore as mentioned, the first and the second optical signal have each an optical power at the output port of the second optical splitter of 0.25, and the third optical signal has an optical power at the output port of the second optical splitter of 0.5. Therefore, the third optical signal is attenuated (based on the inventive method of the described invention) by an amount which is inversely proportional to the split ratio (which is here two to one) of the network element (here the second network element), namely by an amount of 50 percent (one to two, or one half). Thus, by attenuating the third optical signal by an amount of 50 percent, the third optical signal has at the output of the network element (here the second network element) also an optical power 0.25 such as the first and the second optical signals at the output of the network element (here the second network element).

In preferred embodiments, there are more than one network element with a respective optical splitter, this means there is the network element and one or more further network elements, each with a respective optical splitter. For example, there is a first network element with a first optical splitter and a second network element with a second optical splitter. Then a particular optical signal is attenuated at a network element based on the split ratio of the network element and based on the split ratio of the one or more further network element, e.g. the particular optical signal is attenuated at the second network element based on the split ratio of the first network element and based on the split ratio of the second network element. E.g., in a variant of the above embodiment, the first network element comprising the first optical splitter which combines the first optical signal and the second optical signal has three input ports and one output port, thus a split ratio of three to one. Therefore, at the output port of the first optical splitter the first and the second optical signal have each an optical power of one third. Then, the combined optical signal from the first optical splitter (comprising the first optical signal at a value of one third and the second optical signal at a value of one third) and the third optical signal are combined by the second optical signal thus resulting (without attenuating according the described method) in a combined optical signal at the output of the second optical signal comprising the third optical signal at a value of 0.5 and the first optical signal at a value of one sixth and the second optical signal at a value of one sixth. Thus, the third optical signal is attenuated (by the described inventive method) by amount which is based on the split ratio of the first and the second network element, in particular here by an amount which is inversely proportional to the split ratio of the first optical splitter, namely by multiplying the third optical signal by 1/3. Thus, the third optical signal has also an optical power of one sixth at the output port of the third optical splitter (thus the same value as the first and the second optical signal). Thus, the third optical signal is attenuated at the second network element based on a split ratio resulting from the first and the second optical splitter.

Thus, preferably, in more general words, the ODN comprises the network element and one or more further network elements, the network element and each of the one or more further network element having a respective optical splitter and attenuating a particular optical signals of the at least two optical signals comprises attenuating the particular optical signal based on a split ratio, wherein the split ratio is determined by one or more of: the network element and one or more of the further network elements.

In preferred embodiments, the splitter is a PLC (Planar Lightwave Circuit) splitter.

In preferred embodiments, the splitter is implemented as an integrated device.

In preferred embodiments, the splitter is implemented as a discrete device.

In particular, the one or more OLT, receive the at least two optical signals as a combined optical signal. The combined optical signal comprises the at least two optical signals, more specifically wherein one or more of the at least two optical signals might have been attenuated.

In a preferred embodiment, the at least two optical signals are assigned to respective at least two different wavelengths and the at least two optical signals are operated in burst mode and occurring at the same time at the one or more OLT.

In a preferred embodiment, the at least two optical signals are assigned to an identical wavelength and the at least two optical signals are sent in burst mode subsequently in time to the one or more OLT. In a preferred embodiment, the optical power input range of a respective photodiode of one or more OLT, respectively, is exceeded, because one or more of the at least two optical signals is too large in optical power, this means in particular because one of the at least two optical signals is too large in optical power.

Preferably, the at least two optical signals are wavelength division multiplexed.

Preferably, the at least two optical signals are wavelength division demultiplexed at a wavelength division multi-/demultiplexer implemented in front of the one or more optical receivers of the one or more OLT.

Preferably, alternatively or in combination, the at least two optical signals are time division multiplexed.

In a preferred embodiment, each of the at least two optical signals of a respective ONT is transmitted on a different wavelength. This means, a first optical signal of a first ONT is transmitted on a wavelength, which is different of the wavelength of the second optical signal of a second ONT and, if present, of the wavelength of one or more further optical signal of one or more respective further ONT. In other words, a distinct wavelength is assigned to each of the at least two ONT and therefore to each of the at least two optical signals of the respective at least two ONT.

Preferably, as described above, each ONT of the at least two ONT sends one optical signal on a distinct wavelength. In other embodiments, one or more of the at least two ONT sends one or more optical signals on distinct respective wavelengths (thus one ONT might send one or more optical signals), wherein preferably, the wavelengths are distinct from the other wavelength used by the same ONT, and preferably, distinct from the wavelengths used by the one or more further ONT.

In a preferred embodiment, one OLT receives the at least two optical signals of the at least two ONT. In other embodiments, one or more OLT receive the at least two optical signals of the at least two ONT. In a preferred embodiment, one or more wavelength multi-/demultiplexer are implemented to multiplex/ demultiplex optical signals, in particular to transmit (/ receive) particular optical signals based on the respective wavelength to (/ from) a particular ONT.

In a preferred embodiment, the method is implemented on at least two optical signals in the downstream direction, i.e. from one or more OLT to one or more ONT.

In a preferred embodiment, the at least two optical signals are retrieved by splitting, by the network element, a further optical signal into the at least two optical signals. Preferably, the further optical signal is received, by the network element, from an OLT. Preferably, the one or more optical receivers are at least two optical receivers of at least two ONT, respectively.

Preferably, one OLT sends the further optical signal to the network element. The further optical signal comprises the at least two optical signals. In particular, the further optical signal comprises the at least two optical signals on a respective distinct wavelength, this means a respective distinct wavelength is assigned to each of the at least two optical signals which are directed to respective at least two ONT. For example, the further optical signal comprises four optical signals, a first optical signal on a first distinct wavelength (different from the wavelengths used for the second, third and fourth optical signal), a second optical signal on a second distinct wavelength (different from the wavelengths used for the first, third and fourth optical signal), a third optical signal on a third distinct wavelength (different from the wavelengths used for the first, second and fourth optical signal) and a fourth optical signal on a fourth distinct wavelength (different from the wavelengths used for the first, second and third optical signal). Conclusively, the further optical signal comprises at least two optical signals on a respective distinct wavelength (wherein the wavelength of each of the at least two optical signals is different from the respective wavelengths used for the respective other optical signal(s) of the at least two optical signals).

In a preferred embodiment, each of the at least two ONT receives, from the network element, each of the at least two optical signals and selects by means of a wavelength multi-/demultiplexer (here used as wavelength demultiplexer) the respective optical signal which is addressed to said ONT, namely based on the respective wavelength which is used for the respective optical signal of the at least two optical signals and assigned to said ONT. A wavelength multi-/demultiplexer might be implemented at each ONT.

For example, the first optical signal (on the first distinct wavelength) is addressed to the first ONT, the second optical signal (on the second distinct wavelength) is addressed to the second ONT, the third optical signal (on the third distinct wavelength) is addressed to the third ONT and the fourth optical signal (on the fourth distinct wavelength) is addressed to the fourth ONT.

In other embodiments, a wavelength multi-/demultiplexer might be implemented in front of the at least two ONT and demultiplexes the respective optical signal for each of the at least two ONT.

In other preferred embodiments, a wavelength multi-/demultiplexer might be implemented in the network element. Then, the network element does not only split the further optical signal received from the OLT into identical optical signals (before attenuating one or more of these optical signals), but in addition demultiplexes the at least two optical signals based on the respective distinct wavelength.

This means, in preferred embodiments, the network element comprises a (power) splitter. In other preferred embodiments, the network element comprises a (power) splitter and a wavelength multi-/demultiplexer (to select the respective optical signal of the at least two optical signals to the respective ONT of the at least two ONT).

In a preferred embodiment, balancing the at least two optical signals comprises modifying, by the network element, the attenuating of the one or more of the at least two optical signals based on control signals transmitted from the at least two ONT to the network element. Preferably, the control signals are based on measurements of the at least two optical signals, wherein the measurements are made by the at least two ONT.

In a preferred embodiment, the measurements made by the at least two ONT comprise a respective determination of a respective ONT (of the at least two ONT) that the optical signal received by the respective ONT exceeds the optical power input range of the photodiode of the respective optical receiver of the respective ONT.

Preferably, each ONT of the at least two ONT transmits its control signals to the network element. In other embodiments, an ONT transmits its measurements to the network element only, if the ONT determines that the respective optical signal received by said ONT exceeds the optical power input range of the photodiode of the optical receiver of said ONT.

In a preferred embodiment, the optical signal received by the respective ONT is determined to exceed the optical power input range of the photodiode of the respective optical receiver of the respective ONT, in case the optical signal either exceed an upper threshold of the photodiode or the optical signal is below an lower threshold of the photodiode.

In a preferred embodiment, the at least two optical signals comprise a particular, optical signal sent to a particular ONT of the at least two ONT and attenuating one or more of the at least two optical signals comprises attenuating the particular optical signal sent to the particular ONT of the at least two ONT based on a distance between the particular ONT and the network element.

Preferably, attenuating the particular optical signal comprises reducing the optical power of the particular optical signal.

It is noted again that, preferably, what is herein described with reference to a particular optical signal might be applied to each of the at least two optical signals. This means, preferably, each of the at least two optical signals might be regarded as a particular optical signal.

In a preferred embodiment, the particular optical signal is attenuated, in particular by reducing the optical power of the particular optical signal, by an amount which is inversely proportional to the distance between the particular ONT and the network element.

In a preferred embodiment, the attenuating of one or more optical signals is primarily based on the distance between a particular ONT receiving that particular optical signal and the network element, so that the network element attenuates the particular optical signal before sending the particular optical signal to the particular ONT. Then, the particular ONT measures the particular optical signal, more specifically the optical power of the particular optical signal, and might determine that the particular optical signal is still too strong for the receiving photodiode of the particular ONT. The ONT sends its measurements results to the network element and the network element attenuates the particular optical signal, accordingly.

In a preferred embodiment, the at least two optical signals comprise a particular optical signal sent to a particular ONT of the at least two ONT and attenuating one or more of the at least two optical signals comprises attenuating the particular optical signal sent to the particular ONT of the at least two ONT based on a split ratio determined by one or more of the network element and one or more further network elements.

Preferably, the particular optical signal is attenuated by an amount which is inversely proportional to the split ratio determined by one or more of the network element and the one or more further network elements.

For example, the at least two optical signals which are retrieved by splitting the further optical signal (sent from the one or more OLT to the at least two ONT) are three optical signals, a first optical signal, a second optical signal and a third optical signal. Firstly, the further optical signal is split by a first network element (comprising a first optical splitter) in a first intermediate optical signal and a second intermediate signal. The split ratio of the first network element is for example one to two (derived from ratio of the one input port to the two output ports of the first optical splitter). Therefore, the first and the second intermediate optical signal have each an optical power value of 0.5 in comparison to the optical power value at the input port which is defined in this context as having the value of 1. The first optical intermediate signal is split by a second network element (comprising a second optical splitter) with a split ratio of one to two. At the output ports of the second optical network element, the first optical signal and the second optical signal are retrieved, each having an optical power value of 0.25. The second optical intermediate signal is directly transmitted as the third optical signal to one or more ONT Thus the third optical signal has the value of 0.5, while the first optical signal has the value of 0.25 and the second optical signal has the value of 0.25. Because the third optical signal has the value of 0.5, thus twice as much as the first and the second optical signal, the third optical signal is attenuated by the first network element by an amount based on the split ratio determined by the first and the second network element. Here, the amount by which the third optical signal is attenuated at the first network element, is inversely proportional to the split ratio determined by the first and the second optical network element. Therefore, the third optical signal is (according to the described method) attenuated by an amount of 2, thus multiplied by 0.5. Therefore, the third optical signal has the value of 0.25 at the output port of the first network element. Thus, the third optical signal has the same value as the first and the second optical signal (the first and the second optical signal at the output port of the second network element). Thus, attenuating one or more of the at least two optical signals, here of the third optical signal, equalizes preferably the optical power differences of the optical signals which are due to the split ratio of the one or more network elements (i.e. the network element and one or more further network elements) by which one or more of the at least the optical signals are respectively split.

In particular, it is noted that the use of a feature in the singular does not exclude that the method might be implemented analogously on a plurality of the feature used herein in the singular form for illustrative reasons.

For example, in the present application, as mentioned already above with reference to the optical signal transmission in the upstream direction, one signal from each ONT is described for illustrative reasons. However, the method might be implemented on embodiments where more than one optical signal is received by the network element from an ONT, analogously.

Similarly, in preferred embodiments, in the downstream direction, while primarily described with reference to one OLT from which the at least two optical signals are received by the network element (more specifically as described above retrieved from the further optical signal received from the OLT), one or more further OLT might be present sending one or more further optical signals to the network element for forwarding at least two optical signals to the at least two ONT. This means, the at least two optical signals addressed for the at least two ONT might be retrieved from one or more (further) optical signals received, by the network element, from one or more OLT, wherein wavelength and/or time division multiplexing might be used to multiplex and demultiplex the one or more (further) optical signals and/or the at least two optical signals (which are addressed to the ONT). Similarly, while it is primarily described that to each ONT one optical signal is addressed on a distinct wavelength, more than one optical signal of the at least two optical signals might be addressed to one or more of the at least two ONT, wherein wavelength and/or time division multiplexing is used to address one or more optical signals to a respective ONT.

Preferably, by attenuating one or more of the at least two optical signals interchannel and intra-channel crosstalk is suppressed. This applies preferably for signal transmission in the upstream direction and in the downstream direction. In particular inter-channel and intra-channel crosstalk at the wavelength multi-/demultiplexer at the OLT in the CO, can be suppressed. In preferred embodiments, since optical signals exceeding the dynamic power range have been attenuated, the impact of optical signals to each other on the same or different channel is reduced. Further, in preferred embodiments, cross-talk which without implementing the inventive method might occur even in case of few dB in power difference between the at least two optical signals, is suppressed by attenuating one or more of the at least two optical signal, wherein the power difference between the at least two optical signals is attenuated.

Further, the inventive method of attenuating one or more of the at least two optical signals might preferably be applied to embodiments in upstream, where one or more of the at least two optical signals are sent by the respective at least two ONT to the one or more OLT with different optical power, this means in embodiments, when the at least two ONT send the respective optical signal with different optical power, e.g. a first optical signal is sent by a first ONT with more optical power than a second optical signal sent by a second ONT. Further, the inventive method of attenuating one or more of the at least two optical signals might preferably be applied to embodiments in downstream, where one or more of the at least two optical signals which are retrieved by one or more further optical signals sent from one or more OLT differ in optical power because of different optical power of the one or more further optical signals sent from the one or more OLT, this means when one or more of the further optical signals differ in optical power to each other. In embodiments (e.g. upstream and/or downstream) of different optical power of different optical signals, the different optical power is preferably determined as described above and based on this determination one or more of the at least two optical signals is attenuated, thereby preferably reducing the difference in optical power.

The features of the invention might be implemented by the use of hardware, software or combination thereof.

The preferred embodiments described in a general way above and in more detail below are not restrictive, but combinable so as to form further preferred embodiments. The preferred embodiments are illustrative. The scope of the invention is defined by the claims.

### Brief description of the figures

The features and advantages of the invention will be more completely understood by appreciating the following detailed description of preferred embodiments with reference to the figures, wherein
- Fig. 1: depicts a schematic overview for illustrating steps and apparatuses for improving signal transmission in passive optical networks
- Fig. 2: depicts another schematic overview for illustrating steps and apparatuses for improving signal transmission in passive optical networks
- Fig. 3: depicts yet another schematic overview for illustrating steps and apparatuses for improving signal transmission in passive optical networks

### Detailed description

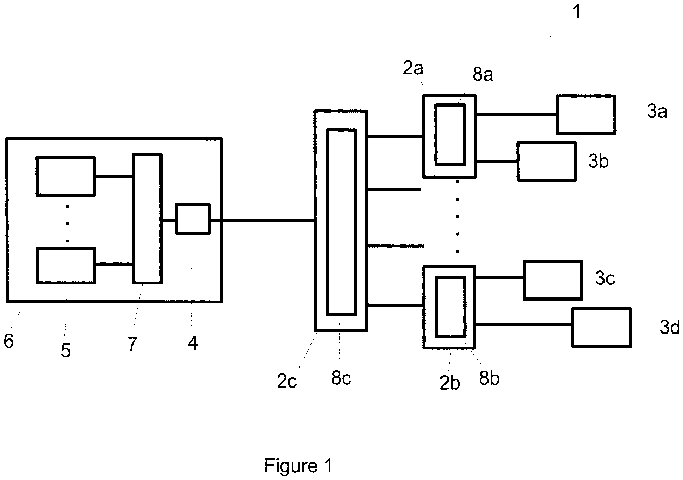

Figure 1 depicts parts of a passive optical network 1. At least two network terminals, ONT, 3 are connected with one or more optical line terminals, OLT, 5. In Figure 1, four ONT 3a, 3b, 3c, 3d (collectively 3) are depicted which are connected with two OLT 5. The OLT 5 are comprised by a Central Office, CO, 6. The CO 6 comprises in addition to the OLT 5 an optical amplifier 4. It is noted that in other embodiments, the optical amplifier 4 is not present. Further, the CO 6 depicted in figure 1 comprises a wavelength multiplexer 7 in the path to the one or more OLT 5, preferably between the optical amplifier 4 and the one or more OLT 5.

In a preferred embodiment, the method is implemented on signals in the upstream direction, this means on signals sent from the at least two ONT 3 to the one or more OLT 5.

In a preferred embodiment in the upstream, the signals of the ONT 3 are combined by one or more splitters 8a, 8b, 8c (collectively 8). In the embodiment depicted in figure 1, a splitter 8 is integrated into a network element 2 (more specifically 2a, 2b, 2c), namely a network element which is used for the implementation of the method for improving signal transmission in PON 1 (for short "a network element" 2).

In implementing the described method, the network element 2 balances at least two optical signals by attenuating one or more of the at least two optical signals.

In figure 1, the signals of two ONT 3, namely ONT 3a and ONT 3b, are combined by a first splitter 8a (integrated into a first network element 2a) and the signals of two further ONT 3, namely ONT 3c and ONT 3d, are combined by a second splitter 8b (integrated into a second network element 2b). Further, the signals combined by the above splitters 8a, 8b are combined by a further splitter 8c (which might be integrated in a further network element 2c, as depicted in figure 1). While in figure 1, respective two ONT 3 are connected to a splitter 8, in other embodiments more than two ONT 3 might be connected to a splitter 8 and/or further splitters 8 might be present and connected to ONT 3 and/or splitters 8.

Whereas in figure 1, three splitters 8 (integrated in respective three network elements 2) are depicted, in a preferred embodiment, only one splitter 8 is present, e.g. the splitter 8a combining the signals of the ONT 3a and 3b (or in another embodiment, not depicted, combining the signals of all ONT 3). In case there is only one splitter 8, then there is also only one network element 2 (namely which comprises the only one splitter 8).

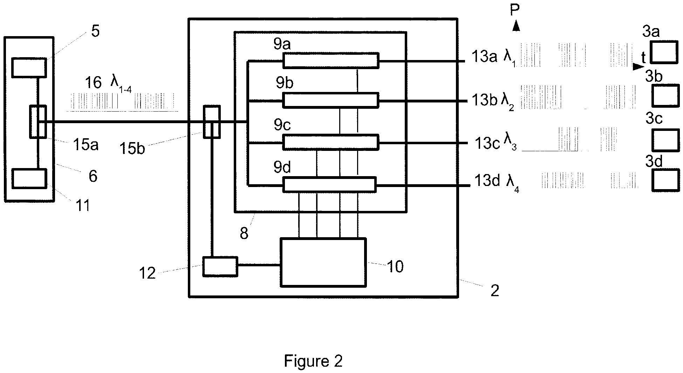

Conclusively, in preferred embodiments (such as in the embodiments depicted in figures 1 and 2), there is more than one splitter 8 for combining the respective signals of the ONT 3 connected to the respective splitter 8 (this means the signals coming directly from the ONT 3), and each of these splitters 8 is integrated into a respective network element 2.

In a preferred embodiment (such as in the embodiments depicted in figures 1 and 2), the signals which have already been combined by said splitters 8 are further combined by another splitter 8 and this other splitter 8 is integrated into a network element 3.

In another preferred embodiment (not depicted), the signals which have already been combined by said splitters 8 are further combined by another splitter 8, but this other splitter 8 is not integrated into a network element 3.

This means, preferably, the one or more splitters 8 which combine the signals coming directly from the ONT 3, are integrated into a respective network element 2, whereas a splitter 8 which combines the signals which have already been combined by a splitter 8 might or might not be integrated into a network element 2.

The signals combined by the one or more (according to the implementation) splitters 8 are transmitted to the CO 6 for reception by the one or more OLT 5. While in figure 1 two OLT 5 are depicted, in a preferred embodiment, only one OLT 5 is present. In other embodiments, more than two OLT 5 are present.

A network element 2 (of which one or more might be present according to the implementation as described above) which is illustrated only coarse in figure 1, is presented in more detail in figure 2. In figure 2, four ONT 3 are connected to the network element 2 (in contrast to figure 1, where respective two ONT 3 are connected to a respective network element 2). This has been made to provide a more detailed view of the inner implementation of the network element 3 for illustrative reasons.

The network element 2 comprises a splitter 8. Preferably, the network element 2, more precisely the splitter 8 integrated into the network element 2, comprises one or more attenuators 9. Each attenuator 9 might be used to attenuate a signal coming from a respective ONT 3. In figure 2, four attenuators 9, namely 9a, 9b, 9c, 9d, are depicted. Each attenuator 9 is used to attenuate a respective optical signal coming from a respective ONT 3. Since the optical signals are transmitted from the ONT 3 (via the network element 2) to the one or more OLT 5 in the upstream, the splitter 8 is used as a combiner. After one or more of the optical signals 13 (here of the four optical signals 13a, 13b, 13c, 13d) have been attenuated, the optical signals 13 (here four optical signals) are combined. In figure 2, the combined optical signals 16 leave the splitter 8 and thus the network element 2 on the left side. Generally, the optical signals 13 might be wavelength division multiplexed and/or time division multiplexed. In figure 2, each optical signal of a respective ONT 3 is transmitted on a different wavelength λ. Further, in figure 2 each optical signal of a respective ONT 3 is time division multiplexed. In more detail, the signal 13a received from ONT 3a is transmitted on a distinct wavelength λ₁ and is further time division multiplexed. Similarly, the signals 13b, 13c and 13d received from ONT 3b, 3c and 3d, respectively, are also transmitted on a distinct wavelength λ₂, λ₃, λ₄, respectively, and are also time division multiplexed. Thus, the combined optical signal 16 of the left side leaving the network element 2 is a overlapping of the four wavelength and time division multiplexed optical signals 13 of the four ONT 3.

In balancing the at least two optical signals 13, the network element 2 attenuates one or more of the at least two optical signals 13. In the embodiment depicted in figure 2, the optical signals 13a, 13b and 13c are attenuated by the network element 2, more precisely, by the attenuators 9a, 9b and 9c, respectively, which are provided in the path of the respective optical signal within the network element 2. This means, the network element 2 comprises an attenuator 9 in each path of a respective optical signal through the network element 2. The network element 2 therefore might attenuate, in particular by means of the respective attenuator 9, one or more of the at least two optical signals 13 before the at least two optical signals (whether or not one or more of the at least two optical signals having been attenuated) are combined (resulting in the combined optical signal 16).

In particular, attenuating one or more of the at least two optical signals 13 comprises reducing a respective optical power of the one or more of the at least two optical signals 13, this means a respective optical power of a first optical signal, a respective optical power of a second optical signal, etc. In figure 2, the optical power of the three optical signals 13a, 13b, 13c coming from ONT 3a, 3b, 3c, respectively, are reduced. This is, because the respective distance between the ONT 3a, 3b, 3c and the network element 2 is rather short (the distances are not depicted in figure 2), the optical power of the signals 13a, 13b, 13c received by the network element 2 from ONT 3a, 3b, 3c, respectively, is high in comparison with the optical power of the optical signal 13d received from ONT 3d.

In particular, it is noted that the height of an optical signal depicted in figure 2 corresponds to the optical power of said optical signal (which is presented over time). For illustrative reasons, the coordinates are depicted in figure 2 only for signal 13a in order not to overload the figure. Respective coordinates might be depicted for each presentation of an optical signal with reference to the optical power over time. Since the optical power of a signal is presented over time, the abscissa is a time-coordinate (indicated by "t") and the ordinate indicates the optical power (indicated by "P").

Preferably, the optical power of the optical signal 13 of a particular ONT 3 is reduced by an amount which is inversely proportional to the distance between said particular ONT 3 and the network element 2. In case, the distance between a particular ONT 3 and the network element 2 is large, the optical power of the optical signal of said particular ONT 3 is not reduced (e.g., in case very large distance) or reduced by a small amount (e.g., in case medium large distance). This is, because of the (very) large distance between said particular ONT 3 and the network element 2, the optical signal of said particular ONT 3 might have a rather (very) low optical power. In case, the distance between a particular ONT 3 and the network element 2 is short, the optical power of the optical signal of said particular ONT 3 is reduced by a big amount. This is, because of the short distance between said particular ONT 3 and the network element 2, the optical signal of said particular ONT 3 might have a rather high optical power (and must therefore be reduced).

In particular, it is noted that the distances and the respective amount by which the respective optical signal 13 might be attenuated, might be relative features. This is, because in the end, by the attenuation of one or more of the optical signals 13, preferably all of the at least two optical signals should be properly received by the photodiode of the optical receiver (here OLT 5). Therefore, the reduction of the optical power of the respective optical signals 13 is made to bring all optical signals 13 of the at least two optical signal 13 into the optical power input range of the receiving photodiode. This means, preferably one or more of the at least two optical signals 13 are attenuated so that none of the at least two optical signals 13 is below the lower threshold or above the upper threshold of the receiving photodiode. In preferred embodiments, where an optical amplifier 4 is present, the amplification of the optical amplifier 4 must also be taken into consideration when attenuating one or more of the at least two optical signals 13. This is, since the optical amplifier 4 - which might be referred to as a (pre-) amplifier of the receiving photodiode - usually amplifies all optical signals linearly, the optical amplifier 4 of the receiving photodiode cannot balance the optical signals exceeding the optical power input range of the receiving photodiode to fit into the optical power input range. Even more, by the amplification through the optical amplifier 4, the power level of the at least two optical signals 13 is enhanced so that one or more of the at least two optical signals 13 might exceed the upper threshold of the photodiode of the optical receiver. This means, with or without an optical amplifier 4 being present, one or more of the at least two optical signals 13 might exceed the optical power input range of the photodiode of the optical receiver, in particular exceed the upper threshold of the photodiode. Therefore, the network element 2 with the attenuators 9 balance the at least two optical signals 13 by attenuating one or more of the at least two optical signals 13 to be adjusted to the optical power input range of the receiving photodiode (in particular in preferred embodiments of an optical amplifier 4 being present after being linearly amplified by the optical amplifier 4of the receiving photodiode). Therefore, the attenuating of one or more of the optical signals 13 is preferably made to reduce too big differences between the respective optical power of the optical signals 13, and in particular to ascertain that the at least two optical signals 13 do not exceed the upper threshold of the receiving photodiode.

As depicted in figure 2, the network element 2, comprises a controller 10 (e.g. a micro controller). Preferably, the network element 2, by means of the controller 10, modifies the attenuating of one or more of the at least two optical signals 13. The controller 10 is connected with each of the attenuators 9 (here 9a, 9b, 9c, 9d) and is adapted to transmit control signals to each of the attenuators 9 (here 9a, 9b, 9c, 9d) causing the respective attenuator 9 (here 9a, 9b, 9c, 9d) to attenuate the respective optical signal 13 (here 13a, 13b, 13c, 13d) which passes the network element 2 on a respective path where the respective attenuator 9 (here 9a, 9b, 9c, 9d) is situated.

Preferably, the network element 2, in particular by means of the controller 10, modifies the attenuating of the one or more of the at least two optical signals 13 based on control signals received from the one or more OLT 5. Preferably, the control signals are based on measurements of the at least two optical signals 13. In particular, the measurements are made by the one or more OLT 5. In the embodiment depicted in figure 2, there is one OLT 5, namely one OLT 5 in the CO 6. The OLT 5 measures the optical signals 13 of the ONT 3 (more specifically the respective optical power of the respective optical signals 13). Preferably, the OLT 5 measures the combined optical signal 16 which comprises the four (possibly attenuated) optical signals 13a, 13b, 13c, 13d. In other words, preferably, the OLT 5 measures the four (possibly attenuated) optical signals 13a, 13b, 13c, 13d which are comprised by the combined optical signal 16.

Preferably, the OLT 5 transmits the control signals to the network element 2. Preferably, for transmission of the control signals to the network element 2, the OLT 2 uses the Intelligent Splitter Module (ISM) protocol. This has the advantage that the ISM equipment which is usually implemented in the CO 6 in which the OLT 5 is situated can be used for transmitting the measurements to the network element 2. More precisely, preferably, in the CO 6 in which the OLT 5 is situated a ODN Monitoring Module, OMM, is implemented. Preferably, the OLT 5 makes the measurements of the at least two optical signals 13 by means of the OMM. Further, the network element 2 is integrated in an Intelligent Splitter Module (not depicted). Therefore in other words, the Intelligent Splitter Module comprises preferably the network element 2. Further, preferably, the Intelligent Splitter Module comprises a communication element for communication with the OLT 5, in particular for receiving control signals from the OLT 5. Accordingly, the CO 6 comprises a corresponding communication element for communication with the network element 2. The communication element of the OLT 5 might be implemented in or adjacent to the OMM which is implemented in the CO 6.

In the embodiment depicted in figure 2, the CO 6 comprises a transceiver 11. Preferably, the transceiver 11 is implemented as the communication element which is part of or adjacent to the OMM implemented at the CO 6. A further transceiver 12 is situated in the network element 2. The further transceiver 12 might be implemented as the communication element which is part of the Intelligent Splitter Module which comprises the network element 2. The control signals are multiplexed on the line between the OLT 5 and the network element 2 by multiplexer 15a and de-multiplexed by de-multiplexer 15b for reception by the transceiver 12 of the network element 2.

Preferably, as mentioned above already, in balancing the at least two optical signals 13, the network element 2 adjusts the at least two optical signals 13 to a respective optical power input range of one or more optical receivers, which are in the embodiments of signal transmission in the upstream direction, the one or more optical receivers of respective one or more OLT 5. In particular, the network element 2 adjusts the at least two optical signals 13 so that none of the at least two optical signals 13 exceeds the upper threshold of the photodiode of the optical receiver.

In preferred embodiments, the respective optical power input range of the one or more optical receivers is determined by the optical power input range of the respective photodiode of the respective optical receiver. More precisely, the optical power input range of the photodiode is determined by the TIA, Transimpedance Amplifier of the photodiode. In particular, the TIA of the photodiode is an element of the photodiode and is not the optical amplifier 4 which is an pre-amplifier of the photodiode. In particular, the TIA transforms the photocurrent (or more generally the optical signal) which is received by the photodiode into an electrical signal. In particular, the upper threshold and the lower threshold of the photodiode are determined by the TIA. Preferably, the lower threshold indicates the lowest optical signals which the photodiode can receive. Below the lower threshold, the optical signals might disappear amongst the noise. Further, the upper threshold defines preferably the drive capability of the TIA output stange at high input power. Above the upper threshold, the photodiode might not work linearly any more and thus might not receive optical signals (exceeding the upper threshold) properly anymore.

In preferred embodiments, one or more optical amplifiers 4 are present. Then the optical power input range of the one or more optical receivers is (also) determined by the one or more optical amplifiers 4 of the one or more optical receivers. This is, because on optical amplifier 4 shifts the operating point because the power level of the optical signals 4 is enhanced by the optical amplifier 4. Therefore, the upper threshold of the photodiode of the respective optical receiver might be exceeded. In figure 1, one optical amplifier 4 is depicted. Although not depicted in figure 2, the CO 6, might comprise also an optical amplifier 4 which amplifies the combined optical signal 16 before being received by the photodiode of the OLT 5.

In more detail, preferably, as depicted in figure 1, one optical amplifier 4 might be situated in front of more then one OLT 5, here illustratively two OLT 5. In other embodiments, each OLT 5 has one separate optical amplifier 4. In case of more than one OLT 5 (such as depicted in figure 1), the signals which are amplified by the optical amplifier 4 might be demultiplexed by Multi-/Demultiplexer (Mux/Demux) 7.

Preferably, by the optical amplifier 4 the optical signals 13 (comprised in the combined optical signal 16) are amplified before the optical signals 13 are received by the photodiode of the optical receiver of the respective OLT 5.

In prior art, in particular because of the amplification by the optical amplifier 4, the optical power input range of the photodiode of the optical receiver,might have been exceeded. This is, in prior art, the difference between the respective optical power of the optical signals might have been so large that either some of the optical signals have not been received properly by the photodiode, because these optical signals having a optical power too low for being received by the photodiode, or otherwise some of the optical signals have not been received by the photodiode or have even destroyed the photodiode, because those optical signals having a optical power too high for the photodiode, in particular because the signals have been amplified by the optical amplifier in order to receive the lowest signals.

However, as mentioned above already, by means of the method and apparatus of the invention, the optical signals are balanced in the way that optical signals having an optical power which would - in particular because of the amplification by the optical amplifier 4 - exceed the optical power input range of the photodiode, are attenuated. Therefore, the difference in regard of the optical power of the optical signals, in particular between the weakest and the strongest optical signals is reduced. In other words, the difference between the lowest optical power (the optical power of the weakest signal) and the highest optical power (the optical power of the strongest signal) has been reduced, preferably to be smaller than 20 dB. Therefore, preferably, all optical signals - in particular after amplification by the optical amplifier 4 - are properly received by the photodiode.

For sake of completeness, it is noted that the expression that the optical power input range of the optical receiver is determined by an optical amplifier does not mean that the optical power input range of the optical receiver is exclusively determined by the optical amplifier, but rather that the optical amplifier is one feature that determines the optical power input range of the optical receiver. As described herein, in particular the quality of the photodiode of the optical receiver influences and thus also determines the optical power input range of the optical receiver. In particular, there are different photodiodes (which different qualities/properties) havening different optical power input ranges. However, since the optical amplifier, if present, usually linearly, amplifies the optical signals, the optical amplifier also determines the optical power input range of the optical receiver.

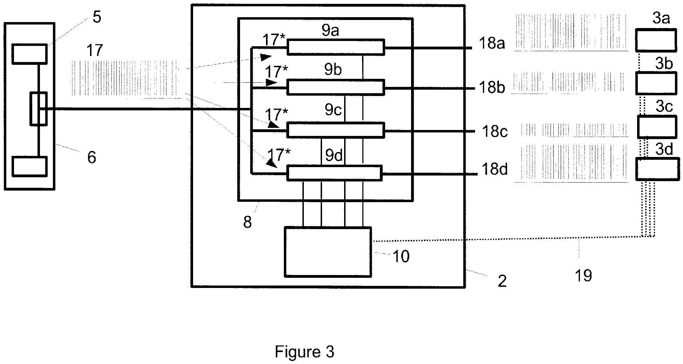

In a preferred embodiment, the method is implemented on optical signals in the downstream direction, i.e. from one or more OLT 5 to at least two ONT 3. In the embodiment depicted in figure 3, there is one OLT 5 and four ONT 3, namely ONT 3a, 3b, 3c, 3d. The at least two optical signals 17*, namely four optical signals 17* in figure 3, are retrieved by splitting, by the network element 2, a further optical signal 17 into the four optical signals 17*. The further optical signal 17 is received by the network element 2 from the OLT 5. The four optical signals 17*, after one or more of them have been attenuated by the network element 2, are sent as the four optical signals 18 to the respective optical receiver of the respective ONT 3, to which they are directed. In more detail, the OLT 5 sends an optical signal 17 which should be termed a further optical signal 17 to the network element 2 which comprises the splitter 8. The splitter 8 splits the further optical signal 17 into four optical signals 17*. In figure 3, the four optical signals 17* are only presented by the reference signs 17* without depicting the signals themselves in order not to overload the figure. The four optical signals 17*, if depicted in figure 3, would be depicted in front of the respective attenuator 9, this means at the top of the respective arrow of the four arrows reaching from the further optical signal 17 to each of the attenuators 9. In the embodiment of figure 3, the splitter 3 splits the further optical signal 17 into four identical optical signals 17*, because the splitter 3 is only a power divider or power splitter and does not include a wavelength demultiplexer. Therefore, each of the four identical optical signals 17* correspond to the further optical signal 17, hence possibly, having a lower optical power. Whether or not the four optical signals 17* have a lower optical power in comparison to the further optical signal 17, one or more of the four optical signals 17* might still have an optical power which would exceed the optical power input range of the respective ONT 3 receiving said optical signal 17*.

Therefore, one or more of the optical signals 17* might be attenuated. As mentioned already, in particular, the four optical signals 17* are provided to the four attenuators 9a, 9b, 9c and 9d, respectively, which are implemented in the respective path within the network element to the respective ONT 3a, 3b, 3c and 3d, for which the respective optical signal 17* is destined. One or more of the optical signals 17* are attenuated, resulting in the respective optical signal 18 (specified as 18a, 18b, 18c, 18d) leaving the network element (on the right side in figure 3).

The network element 2 modifies the attenuating of the one or more of the at least two optical signals 17* based on control signals transmitted from the one or more ONT 3 to the network element 2. Preferably, the control signals are based on measurements of the at least two optical signals 17*, wherein the measurements are made by the at least two ONT 3. In figure 3, the four ONT 3a, 3b, 3c, 3d measure the four optical signals 18a, 18b, 18c, 18d, respectively. The four ONT 3 transmit 19 the control signals to the controller 10 of the network element 2 which modifies the attenuating of the four optical signals 17* by the respective attenuator 9. Preferably, the one or more optical signals 17* are attenuated to be adjusted to the optical power input range of the respective optical receiver of the respective ONT 3 receiving the respective optical signal 18. For example, the particular optical signal 17* is sent as optical signal 18a to the ONT 3a. ONT 3a receives signal 18a, in particular by its receiving photodiode, wherein the signal 18a might be (linearly) amplified by a (pre-) amplifier in front of the receiving photodiode (not depicted) In other embodiments, a (pre-)amplifier is not present. ONT 3 determines that the optical signal 18a is does not exceed the optical power input range of its receiving photodiode. The ONT 3 transmits 19 its measurements to controller 10 of network element 2, which accordingly does not attenuate the optical signal 17* which is destined for ONT 3a. Therefore, the optical signal 18a which is sent to ONT 3a is not attenuated in comparison to the optical signal 17*. Same applies for the optical signal 18d received by ONT 3d. In particular, ONT 3a and 3d might be far away from the network element 3. Therefore, the respective optical signal 18a and 18d are not attenuated so that the optical signals 18a and 18d will be still strong enough when received by the far away ONT 3a and 3d, respectively. However, the distances between the network element 2 and the ONT 3b and between the network element 2 and ONT 3c might be rather short. Therefore, the optical signals 17*, when not attenuated, might exceed the optical power input range of the respective photodiode of ONT 3b and 3c, in particular by exceeding the upper threshold of the respective photodiode of the respective optical receiver of ONT 3b and 3c, in particular after being amplified by the respective optical amplifier of the respective optical receiver of ONT 3b and 3c. Therefore, the optical, signals 17* which result in optical signals 18b and 18c are attenuated by the attenuators 9b and 9c, respectively, by an amount which is inversely proportional to the distance between the particular ONT 3 and the network element 2. For example, the distance between ONT 3b and the network element 2 is rather short, therefore the optical signal 17* is attenuated by about 50 percent so that the attenuated optical signal 18b has an optical power which is about 50 percent of the optical power of the optical signal 17*. Further, the distance between ONT 3c and the network element 2 is very short, therefore the optical signal 18c is attenuated very much so that the optical power of optical signal 18c is only 30 percent of the optical power of the optical signal 17*. Due to the attenuation, the optical signals 18b and 18c do not exceed the respective optical input range of the respective photodiode of the respective optical receiver of ONT 3b and 3c. Therefore, these optical signals 18b and 18c are properly received by ONT 3b and 3c. Conclusively, by selectively and independently attenuating one or more of the optical signals 17* sent as respective optical signals 18 to the respective ONT 3, the optical signal 17 sent from the OLT 5 in direction to the four ONT 3 is properly received by the ONT 3.

As mentioned already, more than one OLT 5 might sent more than one optical signals 17 to the at least two ONT 3, by the use of wavelength and or time division multiplexing. In particular, one or more wavelength division multiplexer might be implemented between the OLT 5 and the ONT 3 to multiplex more than one optical signal sent from the OLT 5 to the ONT 3 and the method to attenuate one or more of the multiplexed optical signals might be applied analogously.

After having described the method in detail, it is noted that the invention provides also the network element 2. The network element 2 is adapted to balance at least two optical signals 13, 17* by attenuating one or more of the at least two optical signals 13, 17* as described in the context of the method. Further, the network element 2 is adapted to implement one or more further steps as described in the preferred embodiments.

The objective of the invention is further achieved by a software program product adapted to execute the method for improving signal transmission in a passive optical network, PON, when the software program product is executed on a computer. The controller 10 (figure 2) might be this computer or might be part of this computer. More generally, the computer may be implemented as a single unit, a stand-alone device, or within a database, integrated in another computer and/or within a computer network. The computer may be implemented through the use of hardware, software and/or hardware capable of executing software in association with appropriate software.

More specifically, the computer can be comprised or implemented by circuit-based processes, including possible implementation as a single integrated circuit, such as an ASIC (= Application Specific Integrated Circuit) or such as an FPGA (= Field Programmable Gate Array), a multi-chip module, a single card, or a multi-card circuit pack. The functions of the computer may be implemented as processing blocks in a software program. Such software may be employed in a digital signal processor, micro-controller, or general-purpose computer implemented as a single device or integrated in a computer network.

The computer may comprise program code embodied in tangible media, such as magnetic recording media, optical recording media, solid state memory, floppy diskettes, CD-ROMs, hard drives, or any other machine-readable storage medium, wherein, when the program code is loaded into and executed in the computer, the computer becomes an apparatus used for practicing the invention.

The invention has the advantage that the optical power input range of the photodiode of the optical receiver is not exceeded. Since, the optical power of one or more of the optical signals is attenuated and thus the optical signals balanced, they do not exceed - in particular, after amplification by the optical amplifier of the optical receiver - the optical power input range of the photodiode. Therefore the restriction the optical distribution network in regard of the distances between the ONT and the OLT has been overcome. It is noted in this context, that the method of the invention is in particular relevant in NG (New Generation)-PON2 Access systems where different wavelengths (in particular up to eight wavelengths) might be used for respective ONT, each ONT using a distinct wavelength. Because of the differing distances between each of the ONT and the network element, the optical power variations of the optical signals sent between the OLT and the respective ONT might vary significantly. Therefore, attenuating one or more of the optical signals as described in the invention is very appropriate to improve transmission of the optical signals in the PON. Accordingly, as each optical signal for a respective ONT can be attenuated separately and independently, the system performance and flexibility is enhanced enabling a variety of service applications such as wireless (4G, 5G), business and residential access.

The invention has the further advantage that inter-channel and intra-channel crosstalk, in particular at the wavelength multi-/demultiplexer at the OLT in the CO, can be suppressed. Since optical signals exceeding the dynamic power range have been attenuated, the impact of optical signals to each other on the same or different channel is reduced.

The invention has the further advantage that in the ONT, the requirements on the side mode suppression ratio of the ONT laser have been alleviated due to the attenuation of optical signals which exceed the dynamic power range, in particular which exceed the upper threshold of the receiving photodiode, side modes of one signal channel have a less impact on other channels. Further, also in embodiments where optical signals differ only by some dB in optical power and therefore would not exceed the upper threshold of the receiving photodiode, attenuating one or more of the at least two optical signals enhances the signal transmission, because side modes of one signal channel have a less on other channels impact because of the attenuation of the signal. Similarly, requirements on the ratio between the optical power of a laser, when enabled (thus sending a signal), and the optical power of the laser, when disabled (thus and however only producing noise), which might be termed BU-ER (burst extinction ratio) are alleviated. Because of the attenuating of the optical signals which differ in optical power, whether or not thereby exceeding the dynamic power range, the impact of the noise is reduced, because the optical power of the noise is also reduced.

Therefore, even by alleviated requirements on the side mode suppression ratio and the burst extinction ratio of the laser of the sending ONT, the suppression of the crosstalk at the OLT receiver is improved. Similar might apply for the OLT laser sending signals to the ONT receiver.

Further, the invention has the advantage, that in case the measurements of the optical signals are transmitted from the OLT to the network element by means of the ISM protocol, the ISM equipment which is usually already present in the PON (in particular on optical splitter module which comprises the network element, and an ODN monitoring module in the CO, where one or more OLT are implemented, can be used. Thereby, hardware and software resources which are already present can be used, thus avoiding the need to acquire new/other equipment. Further, at the receiving side, the costs of the receiving photodiodes might be reduced, since the attenuating of the optical signals to the optical power input range of the photodiode enables the use of cheaper because rather standard photodiodes. Further, the implementation of the network element in combination with a splitter as a central element within the optical distribution network between the OLT and the ONT reduces the costs, because a splitter spits/combines usually a plurality of optical signals, in comparison with implementing a separate network element at each ONT for attenuating the respective optical signals which would be a more complex and therefore costly solution.

Therefore, conclusively, the invention improves the system performance while contemporaneously reducing the costs of the implementation.

## Claims

1. A method for improving signal transmission in a passive optical network (1), PON, the method comprising:
- balancing, by a network element (2), at least two optical signals (13a, 13b, 13c, 13d; 17*) by attenuating one or more of the at least two optical signals (13a, 13b, 13c, 13d; 17*).

2. The method according to claim 1, wherein attenuating one or more of the at least two optical signals (13a, 13b, 13c, 13d; 17*) comprises reducing a respective optical power of the one or more of the at least two optical signals (13a, 13b, 13c, 13d; 17*).

3. The method according to claim 1, wherein balancing, by the network element (2), the at least two optical signals (13a, 13b, 13c, 13d; 17*) comprises:
- adjusting, by the network element (2), the at least two optical signals (13a, 13b, 13c, 13d; 17*) to a respective optical power input range of one or more optical receivers.

4. The method according to claim 3, wherein the respective optical power input range of the one or more optical receivers is determined by a respective photodiode of the one or more optical receivers, in particular by a lower threshold of the respective photodiode and by an upper threshold of the respective photodiode.

5. The method according to claim 3, wherein the at least two optical signals (13a, 13b, 13c, 13d) are received by the network element (2) from at least two optical network terminals, ONT, (3a, 3b, 3c, 3d), respectively, and wherein the one or more optical receivers are optical receivers of one or more optical line terminals, OLT, (5), respectively.

6. The method according to claim 5, further comprising:
- modifying, by the network element (2), the attenuating of the one or more of the at least two optical signals (13a, 13b, 13c, 13d) based on control signals transmitted from the one or more OLT (5) to the network element (2), wherein the control signals are based on measurements of the at least two optical signals (13a, 13b, 13c, 13d), wherein the measurements are made by the one or more OLT (5).

7. The method according to claim 6, wherein the control signals are transmitted from the one or more OLT (5) to the network element (2) by means of Intelligent Splitter Module, ISM, protocol.

8. The method according to claim 5, wherein the at least two optical signals (13a, 13b, 13c, 13d) comprise a particular optical signal (13a, 13b, 13c, 13d) received from a particular ONT (3a, 3b, 3c, 3d) of the at least two ONT (3a, 3b, 3c, 3d) and wherein attenuating one or more of the at least two optical signals (13a, 13b, 13c, 13d) comprises:
- attenuating the particular optical signal (13a, 13b, 13c, 13d) received from the particular ONT (3a, 3b, 3c, 3d) of the at least two ONT (3a, 3b, 3c, 3d) based on a distance between the particular ONT (3a, 3b, 3c, 3d) and the network element (2) and/or based on a split ratio determined by one or more of the network element (2) and one or more further network elements.

9. The method according to claim 5, further comprising:
after attenuating one or more of the at least two optical signals (13a, 13b, 13c, 13d) received from the at least two ONT (3a, 3b, 3c, 3d):
- combining, by the network element (2), the at least two optical signals (13a, 13b, 13c, 13d).

10. The method according to claim 3, wherein the at least two optical signals (17*) are retrieved by splitting, by the network element (2), a further optical signal (17) into the at least two optical signals (17*), wherein the further optical signal (17) is received by the network element (2) from an OLT (5), and wherein the one or more optical receivers are at least two optical receivers of at least two ONT (3a, 3b, 3c, 3d), respectively.

11. The method according to claim 10, further comprising:
- modifying, by the network element (2), the attenuating of the one or more of the at least two optical signals (17*) based on control signals transmitted from the at least two ONT (3a, 3b, 3c, 3d) to the network element (2), wherein the control signals are based on measurements of the at least two optical signals (17*), wherein the measurements are made by the at least two ONT (3a, 3b, 3c, 3d).

12. The method according to claim 10, wherein the at least two optical signals (17*) comprise a particular optical signal (17*) sent to a particular ONT (3a, 3b, 3c, 3d) of the at least two ONT (3a, 3b, 3c, 3d) and wherein attenuating one or more of the at least two optical signals (17*) comprises:
- attenuating the particular optical signal (17*) sent to the particular ONT (3a, 3b, 3c, 3d) of the at least two ONT (3a, 3b, 3c, 3d) based on a distance between the particular ONT (3a, 3b, 3c, 3d) and the network element (2) and/or based on a split ratio determined by one or more of the network element (2) and one or more further network elements.

13. The method according to claim 8 or 12, wherein the particular optical signal (13a, 13b, 13c, 13d; 17*) is attenuated based on a distance between the particular ONT (3a, 3b, 3c, 3d) and the network element (2) and wherein the method further comprising:
- attenuating the particular optical signal (13a, 13b, 13c, 13d; 17*) by an amount which is inversely proportional to the distance between the particular ONT (3a, 3b, 3c, 3d) and the network element (2); and/or
wherein the particular optical signal (13a, 13b, 13c, 13d; 17*) is attenuated based on a split ratio determined by one or more of the network element (2) and one or more further network elements and wherein the method further comprising:
- attenuating the particular optical signal (13a, 13b, 13c, 13d; 17*) by an amount which is inversely proportional to the split ratio determined by one or more of the network element (2) and the one or more further network elements.

14. A network element (2) used for improving signal transmission in a passive optical network (1), PON, the network element (2) being adapted to balance at least two optical signals (13a, 13b, 13c, 13d; 17*) by attenuating one or more of the at least two optical signals (13a, 13b, 13c, 13d; 17*).

15. A software program product adapted to execute the method according to claims 1 - 13, when executed on a computer.
